# EUROPEAN PATENT APPLICATION

(11) **EP 1 512 578 A1**
(43) Date of publication of application: **09.03.2005**
(21) Application number: 03019567.1
(22) Date of filing: 02.09.2003
(51) Int. Cl.: B60Q 1/30, B60Q 1/32, B60Q 3/00

(54) **Lit and retro-reflective optical device**

(71) Applicant: 3M Innovative Properties Company, St. Paul, MN 55133-3427 (US)
(72) Inventor: Eberwein, Arnold, 1831 Diegem (BE)
(74) Representative: VOSSIUS & PARTNER

(57) **Abstract**

An optical device comprising a body (1) defining a cavity (11) having at least one opening (12) and a translucent retro-reflective element (3) having a lens-like structure, arranged to cover said opening (12) is disclosed. A light source (2) is arranged inside the cavity (11). The translucent retro-reflective element includes translucent retro-reflective film (31). The optical device further comprises mounting means for mounting the optical device to a vehicle body (10).

## Description

The present invention relates to a lit and retro-reflective optical device, in particular a warning device used in vehicles.

Lit optical devices, in particular for use in automobiles are commonly known. Such optical devices generally comprise a light source such as light emitting diodes (LEDs) and a reflector.

DE-U-201 15 801 describes a fog lamp or rear fog lamp comprising high intensity LEDs with a reflector. An optical element with at least one LED placed in a conical reflector is described in DE-U-296 17 203. The reflector has two conical surfaces, an inner one into which the light rays coming from the LED are refracted and an outer conical surface, which is a reflector and thus reflects the light. The lamp disclosed in DE-U-200 21 934 comprises a variety of LEDs that are arranged in reflectors that also have essentially conical shapes without, however, referring to the type of reflector. The reflective surface is obtained through a vacuum depositor of, e.g., aluminum.

EP-A-1 182 395 discloses an LED lighting equipment for vehicle using an LED lamp which is placed in a hyperbolic reflector to obtain an essentially parallel light beam. The light source described in US 2002/0080622 has a configuration with several LEDs that in total are supposed to generate white light. The LEDs are placed in a specifically designed reflector having a rather complex geometry. US 2003/0020077 discloses an LED device comprising a reflector member having an approximately semi-spherical recess and a light emitting diode provided in the recess.

All of these known optical devices require the use of high intensity LEDs in order to provide sufficient luminosity, in particular when used in vehicles.

US-A-5 831 375 is related to a multilayer optical film used in conjunction with an electro-luminescent lamp, i.e., the lamp is a flat layer that generates light over the entire area of the layer on application of a voltage. A multilayer film is placed behind the lamp and ensures that practically all light is reflected so that the light is transmitted to one side of the electro-luminescent layer only.

Despite these known optical devices, there is a need to provide further lit optical devices, in particular for the application as a warning device in vehicles.

The present invention provides a lit optical device which may be used as a warning device in a vehicle, in particular in a car door. The optical device has an improved luminance efficiency and reduced power consumption. Furthermore, the optical device of the invention may provide redundancy through a retro-reflective back-up after power failure. Accordingly, even upon a power failure, the optical device may still be clearly visible to a viewer and thus act as a warning device.

According to a first aspect of the present invention, the optical device comprises a body defining a cavity having at least one opening, a light source being arranged inside the cavity and a translucent retro-reflective lens-like configuration including a translucent retro-reflective film, arranged to cover said opening. This configuration may be provided by toping or superimposing a transparent overlay film on the translucent retro-reflective film. The transparent overlay film may be a film made of, for example, polyurethane which is cast and thus forms a lens like configuration having rounded edges.

According to a second aspect of the present invention, the optical device comprises a body defining a cavity having at least one opening, a light source being arranged inside the cavity, a translucent retro-reflective element including a translucent retro-reflective film, arranged to cover said opening, and mounting means for mounting the optical device to a vehicle body.

The light source may comprise one or multiple rather small point sources, such as for example LEDs arranged in an array or a row, or a single small elongate light source, providing the appropriate light spectrum and colour temperature. The LEDs may be provided in a mono- or polychromatic arrangement.

The LEDs can be mounted to a printed circuit board, carrying also the electronic components enabling the use of the appropriate input voltage, e.g., 12V car line power. The electronic components power the light source either permanently or temporarily, depending on the application of the optical device. When used as a warning device for car doors, a power switching element may be provided which activates the light source, e.g. when the car door opens.

The translucent retro-reflective film can be beaded, prismatic or provided with cube corners as known to those skilled in the art. Typically any type of translucent retro-reflective film can be used. For instance, the cube corner retro-reflective film as described in US-A-4,588,258, US-A-5,122,902 and WO-A-98/20375 is useful as the translucent retro-reflective film for the optical device according to the invention. The cube corner retro-reflective films described in these references provide improved angularity along multiple viewing planes. The films may comprise at least one matched pair of cube-corner retro-reflective elements which are rotated 180° with respect to one another, the three lateral mutually perpendicular faces of the elements being defined at their bases by linear edges that lie in a common plane and the optical axes of the elements being tilted towards one another. Furthermore, the article may comprise several types of prismatic retro-reflective elements. In some embodiments, the base edges are the lateral faces of adjacent elements define separation surfaces between the bases of the elements. In other embodiments, a portion of an element is removed to define truncated surfaces on the elements. A beaded retro-reflective film comprises retro-reflective microspheres, as disclosed in US-A-4,005,538, can also be employed.

The body of the optical device according to the invention may consist of molded plastic or embossed metal. The body forms a cavity having an opening. The shape of the cavity may be conical, parabolic, hyperbolic, or the like, or any combination thereof. Preferably, the cavity has substantially a conical shape comprising a rear wall situated substantially opposite the opening, and may further comprise walls between the rear wall and the opening. Preferably, the rear wall is smaller in diameter than the opening and thus the side walls are inclined towards the opening.

The amount and distribution of light extracted out of the front face of the light guide can be enhanced by providing a back reflector arranged on the rear wall of said cavity and/or side reflectors on the side wall. Both the back reflector and the side face reflectors preferably are diffuse reflective, specular reflective, or scattering reflective films with high reflection efficiency. Arranging reflectors and, in particular, highly diffuse or specular or scattering reflective films along the walls of the cavity provides a cavity in which substantially all the light emitted from the light source is redirected towards said opening, so that most of the light emitted by the light source can be used for illuminating the translucent retro-reflective element. Accordingly, such a design is highly efficient with regard to the required brightness, uniform illumination and power consumption.

The opening may have any desired shape, such as round, square, or rectangular. In the case of a rectangular shape, the length can be a multiple of the width, for example, for a car door threshold or a third car back-light. Preferably, the retro-reflective element covers substantially the whole opening of the cavity. The reflector preferably covers substantially the whole inner face of the cavity. The light source is arranged inside the cavity, preferably on the rear wall and centrally with respect to the vertical and/or horizontal dimension of the opening of the cavity. Within the cavity, light is transmitted by multiple reflections at the opening covered by the translucent retro-reflective film, the wall opposite said opening and optionally the side wall of the cavity until the light rays impinge onto the translucent retro-reflective film at an angle at which the light is transmitted through the translucent retro-reflective film and the opening.

The optical device according to the present invention may be used, for example, as a warning device for vehicles, in particular in a car door, for example as a car door threshold, or as a third car back-light.

The present invention further provides a vehicle body comprising the optical device as described above.

The present invention provides an optical device with a flat and flexible design which can easily be integrated in a vehicle body. The visibility of the optical device is never critical at night or in dawn weather conditions, due to the special optical properties of the translucent retro-reflective element. Furthermore, visibility of the optical device is never critical at any viewing angle. The device provides retro-reflective feedback even in case of power failure. In case of a power failure, the passive retro-reflective feature of the device provides a warning signal to the drivers of approaching vehicles if their headlights reach the device and generate retro-reflection.

If long life light sources such as LEDs or similar are used, the maintenance cycles can be strongly reduced or even eliminated. The luminance efficiency is significantly improved compared with known optical devices, and thus, the power consumption is substantially reduced. The optical device can be equipped with flashing feature controlled by electronic components for powering the light source. The electronic components can be arranged inside the body of the optical device. Furthermore, the optical device is available in various colors.

In the following, a preferred embodiment of the invention will be explained in greater detail with reference to the accompanying drawings.

In the drawings
- Fig. 1: is a cross-sectional view through an optical device according to the invention;
- Fig. 2: is a photograph of the optical device according to the present invention in (a) the lit mode and (b) the lit and retro-reflective mode, seen from different viewing angles; and
- Fig. 3: is a graph showing the dependency of the luminescence of a message sign having similar optical properties with respect to visibility under different viewing angles as the optical device according to the present invention, on the distance of a viewer to the sign.

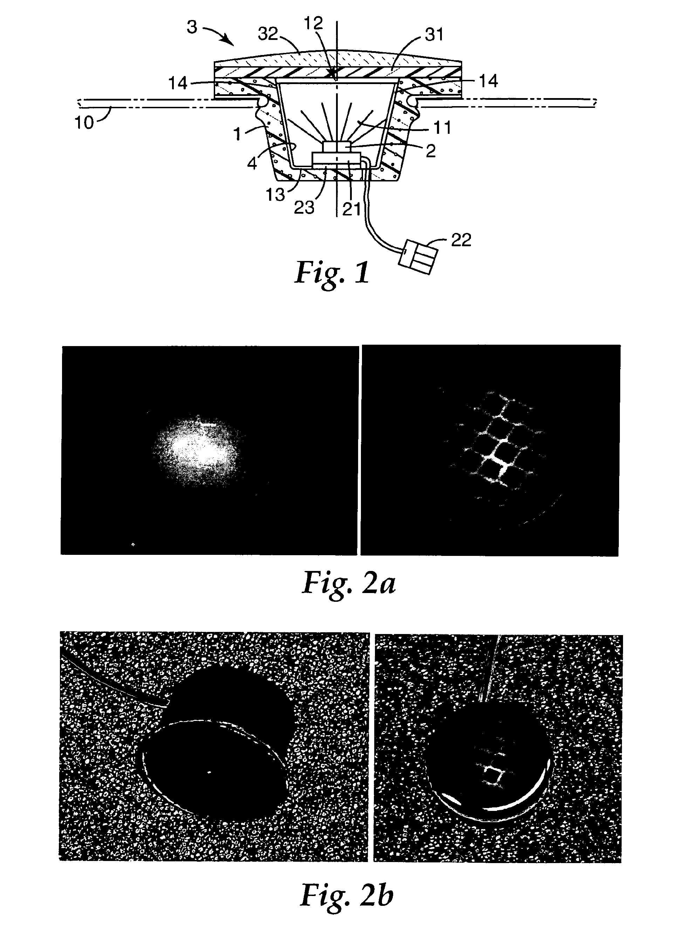

In Fig. 1, a preferred embodiment of an optical device according to the invention is shown in a cross-sectional view in greater detail. The body 1 which is for example a molded plastic body or an embossed metal body defines a cavity 11 having an opening 12, a rear wall 13 situated opposite the opening 12 and a side wall 14. In the embodiment shown in Fig. 1, the cavity 11 has a conical shape, the rear wall 13 being smaller in diameter than the opening 12 and thus the side wall 14 being inclined towards the opening 12. However, the cavity may also have a parabolic, a hyperbolic or a similar shape. The shape of the opening 12 may have any desired shape, such as round, square or rectangular or the like.

Inside the cavity 11, a light source 2 is arranged. The light source 2 may comprise one or multiple points sources such as LEDs, or an elongate light source, depending on the shape of the opening. For example, in case the opening has a rectangular shape, the length being a multiple of the width, it is preferred to provide multiple LEDs arranged in a row. The LED(s) can be provided in various colors and in a mono- or polychromatic arrangement, for example RGB (Red, Green, Blue). The light source 2 is fixed to the device body 1 by, e.g., a heat resistant adhesive or double-sided tape on the rear wall 13 of the body 1. Alternatively, it can be mechanically fixed by screws or rivets or attached to body 1 through an insert moulding process or ultrasonic welding and the like. The light source 2 may further comprise a printed circuit board 21 on which the LED is mounted, for controlling the light source 2 and carrying also the electronic components enabling the use of the appropriate input voltage. The electrical wires 22 for connecting the light source with a power supply leave the device body 1 at the bottom in the required dimension.

The opening 12 of the cavity is covered by a translucent retro-reflective element 3. The retro-reflective element comprises a translucent retro-reflective film 31. The translucent retro-reflective element 3 may further comprise a transparent overlay film 32 or be printed with transparent process inks in appropriate colors and matching the color of the light source. It should be noted that in case of a polychromatic arrangement, a translucent retro-reflective element 3 should be uncolored. Overlay films which are particular useful in the present invention are 3M Vitrotrim products available from 3M Company, St. Paul, USA. In particular, the retro-reflective element can be toped for example with a 3M Vitrofoil or Vitroflex type lens system. These products consist for example of polyurethane and are cast to form a lens-like structure. This lens-like structure presents rounded edges but must not necessarily have the form of an optical lens. However, also optical lenses made of glass or transparent plastic materials may be used in the present invention. The translucent retro-reflective element 3 is durably sealed to the reflector body 1 by means of an appropriate adhesive, foam, rubber, tape or similar. Alternatively, the lens-like structure can be fixed to the body 1 through an insert moulding process, ultrasonic welding or similar processes which simultaneously ensure a sealing of the lens-like structure to body 1.

The translucent retro-reflective film 31 can be beaded or prismatic, or preferably be a cube corner film as known to those skilled in the art. Such a film to be used in the present invention is available from 3M Company, St. Paul, USA under the trade name Scotchlite™ Diamond Grade™ translucent reflective sheeting 3990 T.

On the rear wall 13 as well as on the side wall 14 of the cavity, a highly specular or diffuse reflector 4 is arranged. In Fig. 1, the cavity 11 substantially has a conical shape so that the light which is emitted from the light source 2 in the direction of the side walls 14 is redirected towards the opening 12. The back reflector is preferably comprised of a film which may be laminated to the cavity 11. For example, such a film is available from 3M Company, St. Paul, USA under the trade name Radiant Mirror Film VM 2000, VM 2002 or VM 2000 F1A6 or Light Enhancement Film 3653-100. With the above arrangement, substantially all the light emitted from the light source 2 is redirected to the opening 12 of the cavity 11 for creating an illuminated side of the optical device.

With the above arrangement, the retro-reflective properties of the translucent retro-reflective element are used both for external light impinging on and through the translucent retro-reflective element 3 as well as internal light emitted from the light source 2. In the latter case, the translucent retro-reflective element 3 together with the back reflector 4 provides for multiple light reflections through the cavity 11 resulting in a homogeneous and efficient illumination of the illuminated side of the cavity 11. Light rays emitted from the light source 2 impinging on the translucent retro-reflective film 31 with angles within a certain range, e.g., from about -45°to +45° relative to a line perpendicular to the film, are back-reflected due to the optical properties of the translucent retro-reflective film 31. Therefore, the light source 2 can be arranged close to the translucent retro-reflective element 3 without destroying the uniformity of the illumination.

The optical device further comprises mounting means for mounting the optical device to a vehicle body 10. The optical device may be fixed to the vehicle body 10, in particular a car door, by any suitable mechanical fastening means such as clamps, screws or the like. In case the optical device is used for example as a third car back-light, the optical device may also be adhered to the rear window of the car by means of an optically clear (transparent) adhesive. Suitable adhesives are available from 3M Company, St. Paul, USA (e.g., #8141, #8142, #8161 or #9483).

Fig. 2 shows a photograph of an embodiment of the optical device according to the present invention from different viewing angles. In Fig. 2(a), the optical element a illuminated from the inside. In Fig. 2(b), the optical device also is lit but in addition, external light impinges on the translucent retro-reflective element.

As can be seen in Fig. 2, the present invention provides a compact optical device which can be an integral part of a vehicle body.

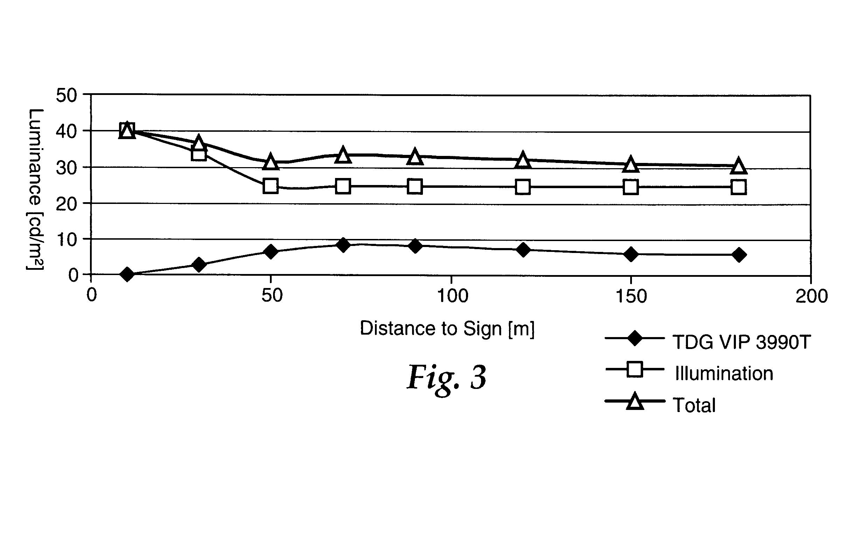

The luminance of a message sign having similar optical properties with respect to visibility under different viewing angles as the optical device according to the present invention, with respect to the distance of the viewer to the sign is shown in Fig. 3. The luminance values have been determined as follows:

The curve marked as TGD VIP 3990T was determined with two sets of general optical measurements and subsequently the dependence on the distance was calculated.

The first set of measurements used a right headlamp of a used VW Passat car measured by LMT GOH (photo goniometer) with a voltage of 13.0 Volts measured at the lamp socket. The luminous intensity was determined over horizontal and vertical angular ranges that typically occur for these applications (± 5-15 degrees).

The second set of measurements was obtained by measuring the relative portions retro-reflected by the Scotchlite™ Diamond Grade™ Translucent retro-reflective sheeting TDG VIP 3990T again over three angular ranges, namely the vertical and horizontal angle with respect to the axis perpendicular to the surface of the sheeting and the angle between the incident and the retro-reflected beam.

The curve as shown in Figure 3 was then obtained by calculating the luminance for the distances in the range from 0 to 200 m. The luminance as such is not dependant on the distance, however, for each distance between the sign and the vehicle different angles occur determined from the fact that the sign as such is 10 m offset from the street and at a height of 3 m resulting in varying angles for each distance between the sign and the vehicle. These angles significantly increase if the vehicle approaches the sign as then the offset of the sign becomes substantial and, therefore, the retro-reflection practically approaches zero.

For the illumination curve the following approach was taken: The sign was chosen so that a luminance of 25 cd/m² was obtained when measuring in a direction perpendicularly to the surface of the sign, i.e., at vertical and horizontal angles of zero. The relative luminance was then measured as a function of the distance using a telephotometer, e.g. PR 650 Spectra Colorimeter from Photo Research in Chatsworth, California, USA. These measurements provide the form of the curve which then was set at 25 cd/m² for a distance of 200 m, corresponding to the fact that the luminance of the sign was chosen to have this value. Due to the fact that inside the sign the light is not reflected back at angles exceeding 45 degrees, a significant increase of the illumination is obtained above these angles and thus also at distances between the sign and the vehicle below 50 m.

The total curve is an addition of the two above curves and shows that, unlike merely retro-reflective signs, the sign according to the invention provides higher luminance at small distances between the sign and the vehicle.

Although the invention has been described and illustrated with reference to specific illustrative embodiments thereof, it is not intended that the invention be limited to those illustrative embodiments. Those skilled in the art will recognize that variations and modifications can be made without departing from the true scope of the invention as defined by the claims that follow. It is therefore intended to include within the invention all such variations and modifications as fall within the scope of the appended claims and equivalents thereof.

## Claims

1. An optical device comprising:
- a body defining a cavity having at least one opening,
- a light source being arranged inside said cavity, and
- a translucent retro-reflective lens-like configuration arranged to cover said opening, said lens-like configuration including a translucent retro-reflective film.

2. The device according to claim 1, further comprising a back reflector being arranged on a wall of said cavity opposite said opening.

3. The device according to claim 2, said back reflector being a diffuse reflector, a specular reflector or a scattering reflector.

4. The device according to any one of the preceding claims, said translucent retro-reflective lens-like configuration further comprising a transparent overlay film.

5. The device according to any one of the preceding claims, wherein said opening has a round, square or rectangular shape.

6. The device according to any one of the preceding claims, wherein said light source comprises one or multiple LED(s).

7. The device according to any one of the preceding claims, further comprising mounting means for mounting said device to a vehicle body, in particular a car door.

8. An optical device comprising:
- a body defining a cavity having at least one opening,
- a light source being arranged inside said cavity,
- a translucent retro-reflective element arranged to cover said opening, said element including a translucent retro-reflective film, and
- mounting means for mounting said optical device to a vehicle body.

9. The device according to claim 8, further comprising the features as set out in any one of claims 2 to 7.

10. A vehicle body comprising the optical device according to any one of the preceding claims.
